# EUROPEAN PATENT APPLICATION

(11) **EP 4 224 761 A2**
(43) Date of publication of application: **09.08.2023**
(21) Application number: 23155302.5
(22) Date of filing: 07.02.2023
(51) Int. Cl.: H04L 1/1822, H04L 1/1829, H04L 1/1867

(54) **HANDLING HARQ FEEDBACK IN INTERNET OF THINGS (IOT)**

(30) Priority: 07.02.2022 WO PCT/CN2022/075398; 27.04.2022 WO PCT/CN2022/089550; 20.01.2023 CN 202310096659
(71) Applicant: MediaTek Singapore Pte. Ltd., Singapore 138628 (SG)
(72) Inventor: TANG, Wen, Beijing (CN); CHEN, Tao, Beijing (CN)
(74) Representative: Hoefer & Partner Patentanwälte mbB

(57) **Abstract**

Apparatus and methods are provided for HARQ enabling and disabling in the IoT network. In one novel aspect, the UE receives HARQ configuration information (1201), determines an HARQ feedback enable-disable state for each HARQ process based on the HARQ configuration information (1202). In one embodiment, the HARQ configuration information includes one or more IoT HARQ information fields, including an IoT per-HARQ-process-feedback enable-disable field, an explicit IoT HARQ feedback field, and an implicit IoT HARQ feedback field. In one novel aspect, the UE determines a new-data state for receiving data based on an IoT new-data rule, which overwrites the NDI field with HARQ feedback disabled. The IoT new-data rule is based on the NDI field and one or more existing field including a HARQ-ACK resource field, a TPC for PUCCH command field, and a HARQ-ACK resource offset field in DCI. IN another embodiment, the IoT new-data rule is to ignore the NDI.

## Description

### CROSS REFERENCE TO RELATED APPLICATIONS

This application is filed under 35 U.S.C. §111(a) and is based on and hereby claims priority under 35 U.S.C. §120 and §365(c) from International Application No. PCT/CN2022/075398, titled "Schemes on Disabling HARQ Feedback in IoT," with an international filing date of February 7, 2022. This application is filed under 35 U.S.C. §111(a) and is based on and hereby claims priority under 35 U.S.C. §120 and §365(c) from International Application No. PCT/CN2022/089550, titled "Schemes on New Data Indicator for Disabled HARQ Feedback in IoT NTN," with an international filing date of April 27, 2022. This application claims priority under 35 U.S.C. §119 from Chinese Application Number ___ titled "__" filed on January 20, 2023. The disclosure of each of the foregoing documents is incorporated herein by reference.

### TECHNICAL FIELD

The disclosed embodiments relate generally to wireless communication, and, more particularly, to disabling/enabling HARQ feedback in Internet of Things (IoT).

### BACKGROUND

Internet of Things (IoT) network enables the communication between electronic devices / user equipment (UEs) through the internet. The IoT network enables smart city, smart homes, pollution control, energy saving, smart transportation, and provides many innovative solutions to various challenges. With the development of the wireless technology, IoT integrated with the latest wireless technology. The narrow band IoT (NB-IoT) and enhanced machine type communication (eMTC) devices uses fifth-generation (5G) telecommunication systems, including new radio (NR) network and non-terrestrial networks (NTN). Hybrid automatic repeat request (HARQ) is mainly used for scheduling management, such as the initial transmission and retransmission of information. In scenarios with large transmission delays, such as NTN, HARQ increases transmission delays and power consumption. The traditional way of HARQ handling does not fit the demanding growth of the IoT network. Further, when HARQ feedback are disabled, the traditional way of using the new data indication (NDI) field as the indication of initial transmission or retransmission causes mismatches when the UE misses one or more NDI indicator.

Improvements and enhancements are required for enabling and disabling HARQ feedback process for IoT devices.

### SUMMARY

Apparatus and methods are provided for HARQ feedback enabling and disabling in the IoT network. Methods according to the invention are defined in the independent claims. The dependent claims define preferred embodiments thereof. In one novel aspect, the UE receives HARQ configuration information in an IoT network, determines an HARQ feedback enable-disable state for each HARQ process based on the HARQ configuration information. Preferably, the HARQ configuration information includes one or more IoT HARQ information fields, including an IoT per-HARQ-process-feedback enable-disable field that indicates an HARQ feedback enable-disable state per HARQ process, an explicit IoT HARQ feedback field, and an implicit IoT HARQ feedback field. Preferably, the UE determines the HARQ feedback enable-disable state for each HARQ process based on the IoT per-HARQ-process-feedback enable-disable field. Preferably, when the IoT per-HARQ-process-feedback enable-disable field does not exist, the UE determines the HARQ feedback enable-disable state based on the explicit IoT field that explicitly indicates the HARQ feedback enable-disable state for one or more HARQ processes. Preferably, the HARQ feedback enable-disable state for each HARQ process is determined the implicit IoT HARQ feedback field. Preferably, the implicit IoT HARQ feedback field is a repetition number in corresponding DCI, and wherein the repetition number is compared to a predefined threshold value to determine the HARQ feedback enable-disable state for each HARQ process.

In one novel aspect, the UE determines a new-data state for receiving data based on an IoT new-data rule, which overwrites the NDI field with HARQ feedback disabled. Preferably, the IoT new-data rule is based on the NDI field and a HARQ-ACK resource field in data control information (DCI). Alternatively or additionally preferably, the IoT new-data rule is based on the NDI field and a transmit power control (TPC) command for physical uplink control channel (PUCCH) field in DCI. Alternatively or (further) additionally preferably, the IoT new-data rule is based on the NDI field and a HARQ-ACK resource offset field in DCI. Alternatively or ((still) further) additionally preferably, the IoT new-data rule is to ignore the NDI field and always takes the transmission as an initial transmission.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates a schematic system diagram illustrating an exemplary IoT network with HARQ feedback disabling procedure in accordance with embodiments of the current invention.
Figure 2 illustrates exemplary diagrams of HARQ feedback enabling and disabling procedures for IoT devices in accordance with embodiments of the current invention.
Figure 3 illustrates a top level diagram for per HARQ process enable and disable feedback procedure in accordance with embodiments of the current invention.
Figure 4 illustrates exemplary diagrams for using one RRC parameter of "HARQ-feedback enabling-disabling per process" to enable or disable one or more HARQ feedback processes in accordance with embodiments of the current invention
Figure 5 illustrates exemplary diagrams to use two RRC parameters with HARQ-feedback enabling-disabling per HARQ process and HARQ-feedback enable or disable for all HARQ process in accordance with embodiments of the current invention.
Figure 6 illustrates adding one or more DCI fields to indicate enable or disable one or more HARQ feedback processes in accordance with embodiments of the current invention.
Figure 7 illustrates exemplary diagrams to re-interpret existing DCI fields to indicate enabling or disabling of one or more HARQ feedback processes in accordance with embodiments of the current invention.
Figure 8 illustrates exemplary diagrams to compare R_threshold and DCI "Repetition Number" field to implicitly enable or disable one or more HARQ feedback processes in accordance with embodiments of the current invention.
Figure 9 illustrates exemplary diagrams using two RRC parameters to implicitly enable or disable one or more HARQ feedback processes in accordance with embodiments of the current invention.
Figure 10 illustrates exemplary diagrams for IoT in NTN with HARQ feedback disabled applying IoT new-data rule in accordance with embodiments of the current invention.
Figure 11 illustrates exemplary diagrams for IoT new-data rules in accordance with embodiments of the current invention.
Figure 12 illustrates an exemplary flow chart for the UE in the IoT network to disable HARQ feedback process in accordance with embodiments of the current invention.
Figure 13 illustrates an exemplary flow chart of an IoT UE in the NTN applying IoT new-data rule in accordance with embodiments of the current invention.
Figure 14 illustrates an exemplary flow chart for the network entity in the IoT network to disable HARQ feedback process in accordance with embodiments of the current invention.
Figure 15 illustrates an exemplary flow chart of a network entity in the NTN applying IoT new-data rule in accordance with embodiments of the current invention.

### DETAILED DESCRIPTION

Reference will now be made in detail to some embodiments of the invention, examples of which are illustrated in the accompanying drawings.

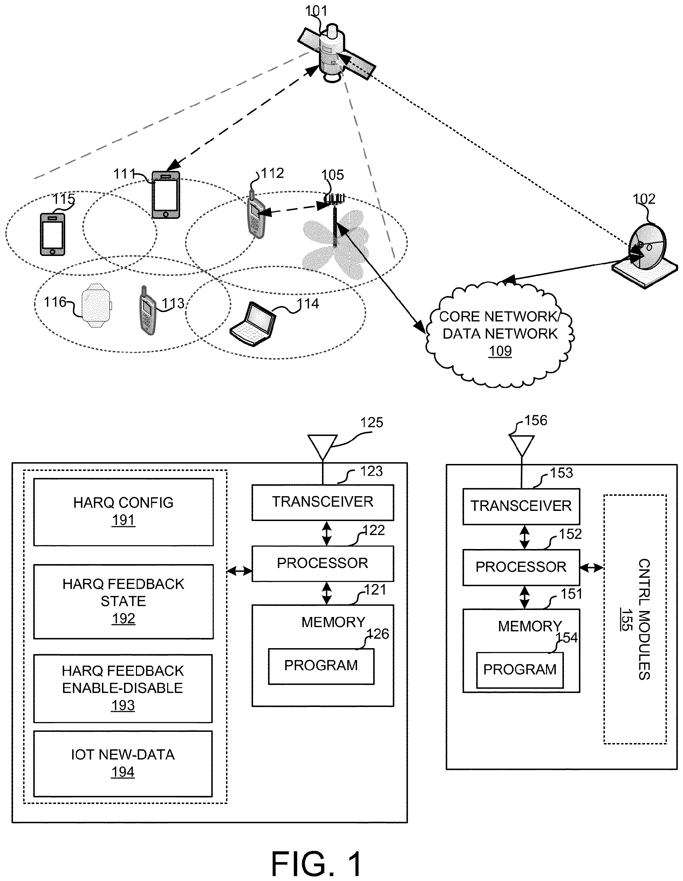

Figure 1 illustrates a schematic system diagram including an exemplary IoT network with HARQ feedback disabling procedure in accordance with embodiments of the current invention. IoT network includes multiple communication devices or mobile stations, such as mobile phones, tablets, laptops, and other 5G devices whether movable, mobile, or stationary, as exemplary illustrated UEs 111, 112, 113, 114, 115, and 116. The UE in the IoT network can establish a communication link with one or more network devices, i.e., NTN nodes, or NR base stations. For example, various NTN nodes 101, NTN gateway 102, and an NR base station 105. The network node can be a communication node, such as radio access network (RAN) such as a 5G base station (gNB), an evolved universal mobile telecommunications system (UMTS), a terrestrial radio access (E-UTRA), an enhanced 4G eNodeB E-UTRA base station (eNB), e.g., an enhanced Node B, an enhanced gNB (en-gNB), or a next generation eNB (ng-eNB). The NTN node can be implemented using various non-terrestrial systems. Core network/data network 109 can be a homogeneous network or heterogeneous network, which can be deployed with the same frequency or different frequencies.

In the scenario with relatively small transmission delay, such as terrestrial network (TN) system, using HARQ feedback has many advantages, such as increasing transmission reliability. In scenarios with large transmission delay, such as the NTN system, disabling HARQ feedback can reduce UE power consumption and transmission delay. In addition, disabling HARQ feedback for a downlink (DL) transmission can improve uplink (UL) throughput in large round-trip time (RTT) scenarios as more resources would be available in the uplink. In one novel aspect, the UE receives HARQ configuration information from the network. The HARQ configuration information includes at last one of the following: the first indication information, the second indication information, the third indication information. If there is the first indication information, which indicates HARQ-feedback enabling-disabling per HARQ process, the UE checks HARQ process ID and determines HARQ feedback enabling or disabling based on the first indication information. If there isn't the first indication information, or if UE cannot determine HARQ feedback enabling or disabling based on the first indication information, UE determines HARQ feedback enabling or disabling based on the second indication information when there is the second indication information. The second indication information indicates HARQ feedback enabling or disabling for all HARQ processes. If there is the first indication information but there isn't the second indication information, when UE receives no HARQ process ID, UE determines HARQ feedback enabling or disabling based on the first indication information for HARQ process ID equals to 0. If there isn't the first indication information, or if UE cannot determine HARQ feedback enabling or disabling based on the first indication information, UE determines HARQ feedback enabling or disabling based on the third indication information when there is the third indication information. The third indication information indicates R_threshold enabling-disabling value. The UE checks "Repetition number" in DCI and determines HARQ feedback enabling or disabling based on the third indication information.

Figure 1 further illustrates simplified block diagrams of a mobile device/UE to perform the enabling and disabling of HARQ feedback process in the IoT network. The UE has an antenna 125, which transmits and receives radio signals. An RF transceiver circuit 123, coupled with the antenna, receives RF signals from antenna 125, converts them to baseband signals, and sends them to processor 122. Preferably, the RF transceiver may comprise two RF modules (not shown). RF transceiver circuit 123 also converts received baseband signals from processor 122, converts them to RF signals, and sends out to antenna 125. Processor 122 processes the received baseband signals and invokes different functional modules to perform features in the UE 111. Memory 121 stores program instructions and data 126 to control the operations of the UE 111. Antenna 125 sends uplink transmission and receives downlink transmissions to/from base stations.

The UE also includes a set of control modules that carry out functional tasks. These control modules can be implemented by circuits, software, firmware, or a combination of them. An HARQ configuration module 191 receives HARQ configuration information, wherein the UE is configured with one or more HARQ processes, and wherein the HARQ configuration information comprises one or more IoT HARQ information fields. An HARQ state module 192 determines an HARQ feedback enable-disable state for each HARQ process based on the HARQ configuration information. An HARQ feedback enable-disable module 193 performs HARQ feedback enabling and disabling procedures for each HARQ process based on the HARQ configuration information. An IoT new-data module 194 that receives disabling information through non terrestrial link (NTN), wherein the HARQ feedback disabling information indicates that all HARQ processes are disabled, determines a new-data state for receiving data based on an IoT new-data rule, wherein the IoT new-data rule determines whether the receiving data is initial-transmission data or re-transmission data, and wherein the IoT new-data rule overwrites a new data indication (NDI) field, and processes the receiving data based on the new-data state.

Figure 1 further illustrates simplified block diagrams of an IoT network entity, such as a gNB 105. gNB 105 has antenna 156, which transmits and receives radio signals. An RF transceiver circuit 153, coupled with the antenna, receives RF signals from antenna 156, converts them to baseband signals, and sends them to processor 152. RF transceiver 153 also converts received baseband signals from processor 152, converts them to RF signals, and sends out to antenna 156. Processor 152 processes the received baseband signals and invokes different functional modules to perform features in gNB 105. Memory 151 stores program instructions and data 154 to control the operations of gNB 105. gNB 105 also includes a set of control modules 155 that carry out functional tasks to communicate with mobile devices, such as UE 112.

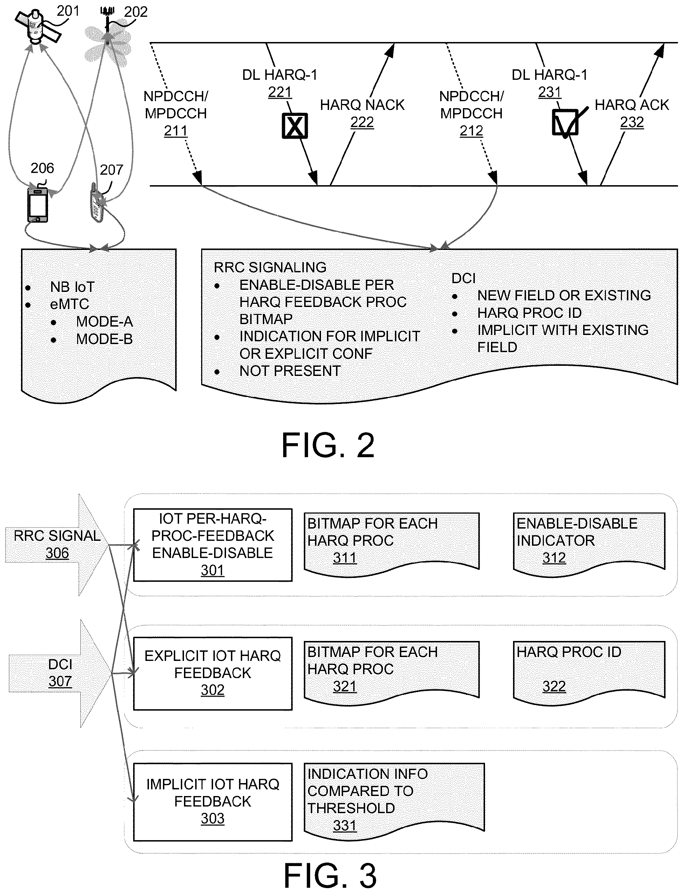

Figure 2 illustrates exemplary diagrams of HARQ feedback enabling and disabling procedures for IoT devices in accordance with embodiments of the current invention. The IoT system/network is mainly divided into NB-IoT and eMTC, based on different system bandwidth and coverage. The bandwidth used by NB-IoT is about 200kHz and supports the transmission of low traffic data at a rate below 100kbps. EMTC technology utilizes 1.4MHz bandwidth and the maximum data transmission rate is 1Mbps. In the NB-IoT scenario, the downlink supports one or two HARQ processes. In the eMTC scenario, the downlink can support up to sixteen HARQ processes for eMTC CE-Mode-A and up to four HARQ processes for eMTC CE-Mode-B. The IoT system can use NTN access and/or other wireless access such as NR. Exemplary IoT devices 206 and 207 can be configured to access NTN through network node 201 or other wireless access, such as gNB 202. IoT devices/UEs 206 and 207 can be NB IoT devices, eMTC CE-Mode-A devices or eMTC CE-Mode-B devices. The IoT devices configured with HARQ processes perform HARQ. At step 211, configuration control signals were sent through narrowband downlink physical control channel (NPDCCH) or MTC DCCH (MDCCH). At step 221, DL HARQ-1 process sent data packets to the UE. The data sending was not successful. At step 222, HARQ NACK was sent. Optionally, at step 212, new configuration information was sent to UEs through NPDCCH or MPDCCH. At step 231, DL HARQ-1 data was received by the UE successfully. At step 233, HARQ ACK was sent to the network.

In the exemplary scenario, considering the problem of large transmission delay in NTN system, it is desirable to disable HARQ feedback to improve the system throughput. For NR NTN, the scheme of disabling HARQ feedback utilizes RRC parameter "HARQ feedback enabling disablingperharqprocess-r17" to pre-configure the HARQ ID corresponding to enabled feedback and the HARQ ID corresponding to disabled feedback. When eNB performs HARQ scheduling, it schedules specific HARQ process with enabling and disabling of HARQ feedback through the "HARQ process number" field in DCI. That is, the UE can know the "HARQ process number" by receiving DCI. Then UE can know whether to disable HARQ feedback through the RRC parameter "HARQ feedback enabling disablingperharqprocess-r17". When the IoT equipment needs to be used in the scenario with large delay, disabling HARQ feedback is required to reduce the transmission delay and increase the transmission information throughput. However, in NB-IoT and eMTC scenarios, the "HARQ process number" field may not exist. Hence, the method utilized in NR NTN isn't applicable in IoT scenarios with large delay.

In one novel aspect, disabling and enabling HARQ feedback procedure per HARQ process for UEs in the IoT network is provided. Preferably, RRC signaling is provided to enable or disable feedback of HARQ process with a bitmap. Alternatively or additionally preferably, an indicator is configured in the RRC signal and with one or more corresponding HARQ process ID in DCI. Alternatively or additionally preferably, a new DCI field is used to provide HARQ per-process enable and disable feedback information. Preferably, the HARQ enable and disable feedback information is provided explicitly with the new field or existing fields. Preferably, DCI existing field is used to implicitly indicate enable and disable feedback per HARQ process.

Figure 3 illustrates a top level diagram enable and disable HARQ feedback procedure for per HARQ process in accordance with embodiments of the current invention. In one novel aspect, UE in the IoT network perform enable or disable HARQ feedback process based on one or more IoT HARQ information fields. The IoT HARQ information fields includes an IoT per-HARQ-process-feedback enable-disable field 301, an explicit IoT HARQ feedback field 302, and an implicit IoT HARQ feedback field 303. IoT per-HARQ-process-feedback enable-disable field 301 can be received from RRC signaling 306 or existing or new field in DCI 307 can be used as IoT per-HARQ-process-feedback enable-disable field 301. P explicit IoT HARQ feedback field 302 can be received from RRC signal 306 or DCI 307. Implicit IoT HARQ feedback field 303 is received from DCI 307 using existing DCI fields. In oneimplementation, IoT per-HARQ-process-feedback enable-disable field 301 is a bitmap 311. In an alternative or additional implementation, it is an indicator 312 for enabling or disabling one or more HARQ feedback processes. The HARQ process is either explicitly provided as HARQ process ID or is implicitly determined based on implicit IoT HARQ feedback field. Explicit IoT HARQ feedback field 302 can be a bitmap 321 to explicitly enable or disable one or more HARQ feedback processes; it can be HARQ process ID 322. In oneimplementation, the explicit feedback field 302 is one bit in DCI. In one scenario, the one bit in DCI indicates disabling with '0' and enabling with '1'. Implicit IoT HARQ feedback field 303 are existing DCI fields when set with predefined values, implicitly indicates enabling or disabling one or more HARQ feedback processes.

Preferably, bitmap 311 for each HARQ process is received. The UE performs enabling or disabling HARQ feedback processes based on bitmap 311 for each HARQ process. Alternatively or additionally preferably, the UE performs enabling or disabling HARQ feedback processes based on bitmap 321 for each HARQ process from the DCI. Alternatively or additionally preferably, the UE receives enable-disable indicator 312 and HARQ process ID 322 and performs HARQ feedback enabling and disabling accordingly. Preferably, the UE is an NB IoT, both the IoT per-HARQ-process-feedback enable-disable field 301, and the explicit IoT HARQ field 302 may present. The explicit IoT overwrites the IoT per-HARQ-process-feedback enable-disable field for one or more corresponding HARQ processes when presented based on an overwriting rule. The overwriting rule may enable only overwriting the enabling of the HARQ feedback, or only overwriting the disabling of the HARQ feedback, or overwriting both enabling and disabling of the HARQ feedback.

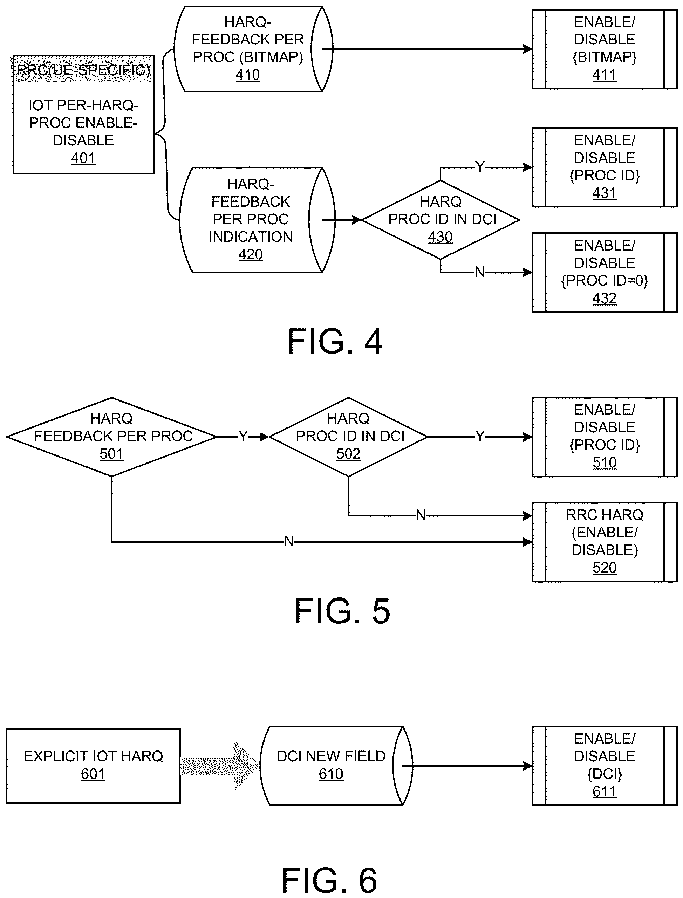

Figure 4 illustrates exemplary diagrams for using one RRC parameter of "HARQ-feedback enabling-disabling per HARQ process" to enable or disable one or more HARQ feedback processes in accordance with embodiments of the current invention. At step 401, RRC configures cell_specific/UE_specific RRC parameter "HARQ-feedback enabling-disabling per HARQ process." In one implementation 410, a bitmap is received from RRC signal. At step 411, the UE enables or disables one or more corresponding HARQ feedback processes based on the received RRC parameter. In an alternative or additional implementation 420, the RRC parameter is an indicator. At step 430, the UE determines if one or more HARQ process IDs are presented. If step 430 determines yes, at step 431, the UE enables or disables HARQ feedback based on the above RRC parameter and DCI "HARQ process number" field. If step 430 determines no, at step 432, the UE enables or disables HARQ feedback process based on the configuration of RRC parameter "HARQ-feedback enabling-disabling per HARQ process" for "HARQ process number" equals to zero.

Figure 5 illustrates exemplary diagrams to use two RRC parameters with HARQ-feedback enabling-disabling per HARQ process and HARQ-feedback enable or disable for all HARQ process in accordance with embodiments of the current invention. Preferably, RRC configures cell_specific/UE_specific RRC parameter "HARQ feedback enable or disable" for all HARQ process. At step 501, the UE determines whether cell_specific/UE_specific RRC parameter "HARQ-feedback enabling-disabling per HARQ process" exists. If step 501 determines no, UE, at step 520, enables or disables HARQ feedback based on RRC parameter "HARQ feedback enable or disable." If step 501 determines yes, the UE enables or disables HARQ feedback based on the above RRC parameter and DCI "HARQ process number" field. At step 502, the UE determines whether the HARQ process number exists. If step 502 determines no, UE, at step 520, enables or disables HARQ feedback based on RRC parameter "HARQ feedback enable or disable." If step 502 determines yes, the UE enables or disables the HARQ feedback process based on the two parameters. "HARQ feedback enable or disable" can be updated by MAC CE.

Figure 6 illustrates adding one or more DCI fields to indicate enable or disable one or more HARQ feedback processes in accordance with embodiments of the current invention. In one embodiment 601, UE receives explicit IoT HARQ enable-disable indication. In one implementation 610, a new DCI field is added to carry the information. One bit DCI field "HARQ-feedback enabling-disabling" to indicate enable or disable of HARQ feedback. "0" indicates enable, while "1" indicates disable. At step 611, the UE enables or disables the HARQ feedback process based on the new DCI field.

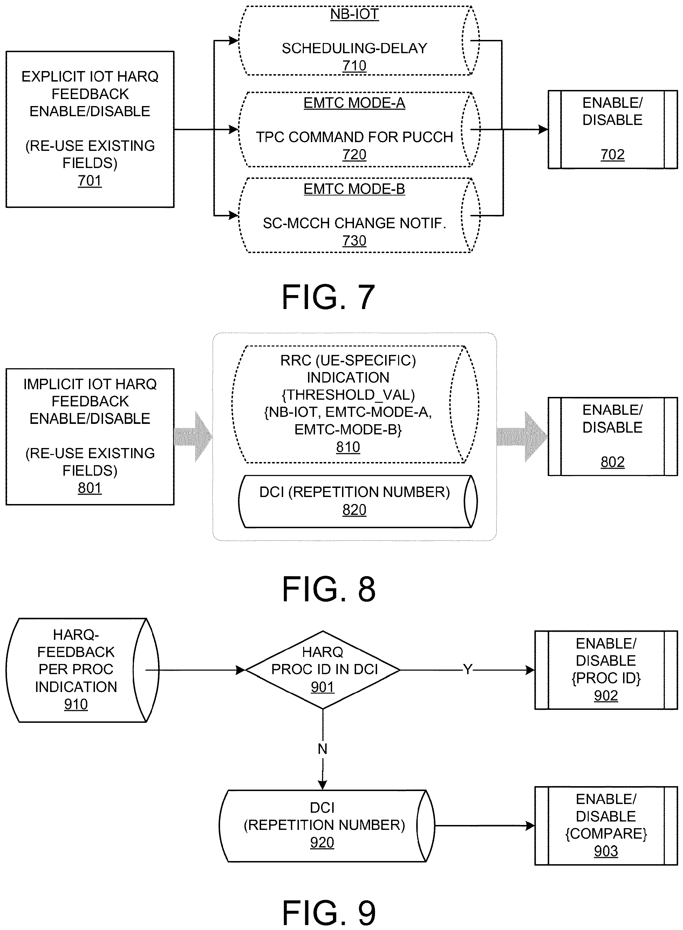

Figure 7 illustrates exemplary diagrams to re-interpret existing DCI fields to indicate enabling or disabling feedback of one or more HARQ processes in accordance with embodiments of the current invention. In one embodiment 701, explicit IoT HARQ field is used. An existing DCI field is used to carry the HARQ configuration information for the IoT devices. In implementation 710, the "Scheduling delay" field and "HARQ-ACK resource" field are used to carry the explicit IoT HARQ information. Preferably, implementation 710 applies for NB-IoT. In one example, when Scheduling delay" field = '000' and "HARQ-ACK resource" field = '0000', the explicit IoT HARQ field indicates to disable the HARQ feedback, otherwise, to enable the HARQ feedback. In alternative or additional implementation 720, the "TPC command for PUCCH" field and "HARQ-ACK resource offset" field are used to carry the explicit IoT HARQ information. Preferably, implementation 720 applies for eMTC CE-Mode-A. When "TPC command for PUCCH" field = '00' and "HARQ-ACK resource offset" field = '00' and indicates disabling of HARQ feedback, otherwise, enable of HARQ feedback. In alternative or additional implementation 730, the "Information for SC-MCCH(single-cell multicast control channel) change notification" field and "HARQ-ACK resource offset" field are used to carry the explicit IoT HARQ information. Preferably, implementation 730 applies to eMTC CE-Mode-B. When "Information for SC-MCCH change notification" field = '00' and "HARQ-ACK resource offset" field = '00' and indicates disable of HARQ feedback, otherwise, enable of HARQ feedback. At step 702, the UE enables or disables one or more HARQ feedback processes based on the IoT HARQ configuration.

Figure 8 illustrates exemplary diagrams to compare R_threshold and DCI "Repetition Number" field to implicitly enable or disable one or more HARQ feedback processes in accordance with embodiments of the current invention. In one embodiment 801, implicit IoT HARQ feedback field is used. In one implementation, RRC configures cell_specific/UE_specific RRC parameter 810 "R_threshold enabling-disabling" indicating the R_threshold value for NB-IoT, CE-Mode-A and CE-Mode-B respectively, UE utilized "R_threshold enabling-disabling" and DCI "Repetition number" 820 field to determine enable or disable. R_threshold enabling-disabling value equals to the maximum repetition number or specific repetition number equals to integer times of the maximum repetition number, or specific repetition number from {1,2,..., the maximum repetition number}, or R_threshold enabling-disabling value equals to the max field number in DCI "Repetition number" field, or specific field number from {1,2,..., the max field number in DCI "Repetition number" field}. UE compares the R_threshold and the repetition number notified in DCI "Repetition number" field. If R corresponds to "Repetition number" field >= R_threshold, the HARQ feedback is disable, else, the HARQ feedback is enable. R_threshold value can be updated by MAC CE. MAC CE updates differential value or full value of R_threshold value. At step 802, the UE enables or disables one or more HARQ feedback processes based on the IoT HARQ configuration.

Figure 9 illustrates exemplary diagrams using two RRC parameters to implicitly enable or disable one or more HARQ feedback processes in accordance with embodiments of the current invention. In one embodiment 910, RRC configures cell_specific/UE_specific RRC parameter "HARQ-feedback enabling-disabling per HARQ process", UE enables or disables HARQ feedback based on above RRC parameter and DCI "HARQ process number" field. RRC configures cell_specific/UE_specific RRC parameter "R_threshold enabling-disabling" indicating the R_threshold value for NB-IoT, CE-Mode-A and CE-Mode-B respectively. At step 902, the UE determines enable or disable based on the RRC parameter. At step 901, the UE determines whether DCI "HARQ process number" field exists. If step 901 determines yes, the UE, at step 902, enables or disables one or more HARQ feedback processes based on the IoT HARQ. If step 901 determines no, UE, at step 920, determines the enable-disable state of the HARQ feedback based on the comparison of the R_threshold and the repetition number notified in DCI "Repetition number" field. If R corresponds to "Repetition number" field >= R_threshold, the HARQ feedback is disabled, else, the HARQ feedback is enabled. At step 903, the UE determines enable or disable based on the RRC parameter.

In one novel aspect, when the HARQ feedback is disabled, the UE determines whether the received data is an initial transmission or a retransmission based on an IoT new-data rule, which overwrites the new data indication (NDI) field.

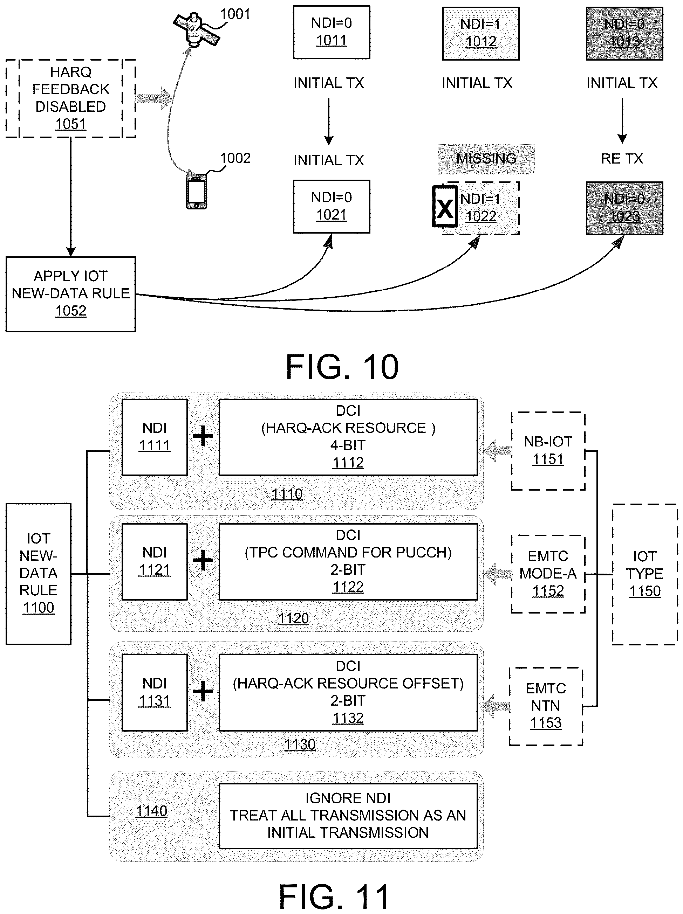

Figure 10 illustrates exemplary diagrams for IoT in NTN with HARQ feedback disabled applying IoT new-data rule in accordance with embodiments of the current invention. A UE 1002 in an IoT network is connected with a network node 1001. The new data indicator (NDI) indicates whether the current transmission is new or retransmission. For a DCI scheduled transmission, IoT UE decodes the DCI and determines whether the transmission is new or retransmitted based on NDI field in DCI. For the same HARQ process number or without HARQ process (when downlink only supports 1 HARQ process), if NDI doesn't change, then UE thinks this transmission as the retransmitted one, else, as the new one.

In one scenario 1051, HARQ feedback for UE 1002 is disabled. As an example, for the same HARQ process with HARQ feedback disabled, there are three transmissions respectively with NDI {0,1,0}. At the transmitter side, three exemplary consecutive NDI was transmitted from the network to UE 1002. NDI 1011 is '0' indicating initial transmission, NDI 1012 is '1' indicating new transmission, and NDI 1013 is '0' indicating initial transmission. At the receiver side, UE 1002 may miss some transmission from the network. The UE receives NDI 1021 with '0' indicating initial transmission. UE 1002 misses NDI 1022 with '1'. When UE 1002 receives NDI 1023 with `0', UE 1002 misunderstands the third transmission with NDI 1023 as retransmission of the first transmission with NDI 1021 when the second transmission is missed by UE. In an IoT NTN scenario, in the case of disabling HARQ feedback, the IoT new-data rule 1052 is provided to overwrite the current NDI to help UE decide whether the transmission is new or retransmitted, to increase reliability and benefit UE power consumption.

Figure 11 illustrates exemplary diagrams for IoT new-data rules in accordance with embodiments of the current invention. In one novel aspect, the new-data state, which is an initial transmission, or a retransmission is determined based on IoT new-data rule 1100, which overwrites the NDI field. Preferably, the IoT new-data rule is determined based on the UE type 1150, including an NB-IoT device 1151, an eMTC CE-Mode-A device 1152, and an eMTC NTN device 1153. Preferably, the IoT new-data rule combines the NDI and a DCI field. When the DCI field is all zero, the UE determines it is an initial transmission regardless of the NDI value. If the DCI field is not all zero, the UE determines the new-data state based on the NDI value, which is when the NDI value is the same previous NDI value of the same process ID or without a process ID, it is a retransmission, otherwise, it is an initial transmission. Preferably, the DCI field used for the IoT new-data rule is one of the DCI fields including the HARQ-ACK resource field, the HARQ-ACK resource offset field, and the transmit power control (TPC) command for physical uplink control channel (PUCCH) field. Alternatively or additionally preferably, other existing or new data fields may be used to combine with the NDI value for IoT new-data state. (Further) alternatively or additionally preferably, the NDI is ignored, and all data received are determined to be initial transmission.

In one implementation 1110, the new-data rule determines the new-data state for the UE based on "New data indicator" field (1-bit) 1111 and "HARQ-ACK resource" field (4-bit) 1112 in DCI. Preferably, new-data rule 1110 applies to NB-IoT devices 1151.

The UE determines whether the transmission is based on the NDI (1-bit) and the HARQ-ACK resource (4-bit) fields. If the 4-bit HARQ-ACK resource field is all '0', (i.e., `0000'), the new-data state is an initial transmission regardless of the NDI. If the 4-bit HARQ-ACK resource field is not '0000' and the NDI is the same as the previous NDI value with the same process ID or without process ID, the UE determines it is retransmission. If the 4-bit HARQ-ACK resource field is not '0000' and the NDI is not the same as the previous NDI value with the same process ID or without process ID, the UE determines it is a new transmission. Table-1a and Table-1b illustrate the new-data state for UE based on the NDI 1111 and HARQ-ACK resource" field 1112.

Table-1a illustrates the IoT new-data state based on NDI and HARQ-ACK resource filed, when previous NDI received with the same process ID or without a process ID is '0'.

| New transmission/ re-transmission | NDI 1-bit | HARQ-ACK resource 4-bit |
|---|---|---|
| new | 0 | 0000 |
| retransmission | 0 | 0001 |
| | 0 | 0010 |
| | 0 | 0011 |
| | 0 | 0100 |
| | 0 | 0101 |
| | 0 | 0110 |
| | 0 | 0111 |
| | 0 | 1000 |
| | 0 | 1001 |
| | 0 | 1010 |
| | 0 | 1011 |
| | 0 | 1100 |
| | 0 | 1101 |
| | 0 | 1110 |
| | 0 | 1111 |
| new | 1 | 0000 |
| | 1 | 0001 |
| | 1 | 0010 |
| | 1 | 0011 |
| | 1 | 0100 |
| | 1 | 0101 |
| | 1 | 0110 |
| | 1 | 0111 |
| | 1 | 1000 |
| | 1 | 1001 |
| | 1 | 1010 |
| | 1 | 1011 |
| | 1 | 1100 |
| | 1 | 1101 |
| | 1 | 1110 |
| | 1 | 1111 |

Table-1b illustrates the IoT new-data state based on NDI and HARQ-ACK resource filed, when previous NDI received with the same process ID or without a process ID is '1'.

| New transmission/ re-transmission | NDI 1-bit | HARQ-ACK resource 4-bit |
|---|---|---|
| new | 0 | 0000 |
| | 0 | 0001 |
| | 0 | 0010 |
| | 0 | 0011 |
| | 0 | 0100 |
| | 0 | 0101 |
| | 0 | 0110 |
| | 0 | 0111 |
| | 0 | 1000 |
| | 0 | 1001 |
| | 0 | 1010 |
| | 0 | 1011 |
| | 0 | 1100 |
| | 0 | 1101 |
| | 0 | 1110 |
| | 0 | 1111 |
| new | 1 | 0000 |
| retransmission | 1 | 0001 |
| | 1 | 0010 |
| | 1 | 0011 |
| | 1 | 0100 |
| | 1 | 0101 |
| | 1 | 0110 |
| | 1 | 0111 |
| | 1 | 1000 |
| | 1 | 1001 |
| | 1 | 1010 |
| | 1 | 1011 |
| | 1 | 1100 |
| | 1 | 1101 |
| | 1 | 1110 |
| | 1 | 1111 |

In one alternative or additional implementation 1120, the new-data rule determines the new-data state for the UE based on "New data indicator" field (1-bit) 1121 and "TPC command for PUCCH" field (2-bit) 1122 in DCI. Preferably, new-data rule 1120 applies to eMTC CE-Mode-A devices 1152.

The UE determines whether the transmission is based on the NDI (1-bit) and the HARQ-ACK resource offset (2-bit) fields. If the 2-bit HARQ-ACK resource offset field is all '0', (i.e., `00'), the new-data state is an initial transmission regardless of the NDI. If the 2-bit TPC command for PUCCH field is not '00' and the NDI is the same as the previous NDI value with the same process ID or without process ID, the UE determines it is retransmission. If the 2-bit TPC command for PUCCH field is not '00' and the NDI is not the same as the previous NDI value with the same process ID or without process ID, the UE determines it is a new transmission. Table-2a and Table-2b illustrate the new-data state for UE based on the NDI 1121 and HARQ-ACK resource offset" field 1122.

Table-2a illustrates the IoT new-data state based on NDI and TPC command for PUCCH filed, when previous NDI received with the same process ID or without a process ID is '0'.

| New transmission/ re-transmission | NDI 1-bit | TPC command for PUCCH 2-bit |
|---|---|---|
| new | 0 | 00 |
| retransmission | 0 | 01 |
| | 0 | 10 |
| | 0 | 11 |
| new | 1 | 00 |
| | 1 | 01 |
| | 1 | 10 |
| | 1 | 11 |

Table-2b illustrates the IoT new-data state based on NDI and TPC command for PUCCH filed, when previous NDI received with the same process ID or without a process ID is '1'.

| New transmission/ re-transmission | NDI 1-bit | TPC command for PUCCH 2-bit |
|---|---|---|
| new | 0 | 00 |
| | 0 | 01 |
| | 0 | 10 |
| | 0 | 11 |
| new | 1 | 00 |
| retransmission | 1 | 01 |
| | 1 | 10 |
| | 1 | 11 |

In one alternative or additional implementation 1130, the new-data rule determines the new-data state for the UE based on "New data indicator" field (1-bit) 1131 and "HARQ-ACK resource offset" field (2-bit) 1132 in DCI. Preferably, new-data rule 1130 applies to eMTC NTN devices 1153.

The UE determines whether the transmission is based on the NDI (1-bit) and the HARQ-ACK resource offset (2-bit) fields. If the 2-bit HARQ-ACK resource offset field is all '0', (i.e., `00'), the new-data state is an initial transmission regardless of the NDI. If the 2-bit HARQ-ACK resource offset field is not '00' and the NDI is the same as the previous NDI value with the same process ID or without process ID, the UE determines it is retransmission. If the 2-bit HARQ-ACK resource offset field is not '00' and the NDI is not the same as the previous NDI value with the same process ID or without process ID, the UE determines it is a new transmission. Table-3a and Table-3b illustrate the new-data state for UE based on the NDI 1131 and HARQ-ACK resource offset" field 1132.

Table-3a illustrates the IoT new-data state based on NDI and HARQ-ACK resource offset field, when previous NDI received with the same process ID or without a process ID is '0'.

| New transmission/ re-transmission | NDI 1-bit | HARQ-ACK resource offset 2-bit |
|---|---|---|
| new | 0 | 00 |
| retransmission | 0 | 01 |
| | 0 | 10 |
| | 0 | 11 |
| new | 1 | 00 |
| | 1 | 01 |
| | 1 | 10 |
| | 1 | 11 |

Table-3b illustrates the IoT new-data state based on NDI and HARQ-ACK resource offset field, when previous NDI received with the same process ID or without a process ID is '1'.

| New transmission/re-transmission | NDI 1-bit | HARQ-ACK resource offset 2-bit |
|---|---|---|
| new | 0 | 00 |
| | 0 | 01 |
| | 0 | 10 |
| | 0 | 11 |
| new | 1 | 00 |
| retransmission | 1 | 01 |
| | 1 | 10 |
| | 1 | 11 |

In another alternative or additional implementation IoT new-data rule 1140 applies. The UE ignores the NDI field and determines all receiving data are initial-transmission data. Preferably, new-data rule 1140 applies to NB IoT and eMTC NTN.

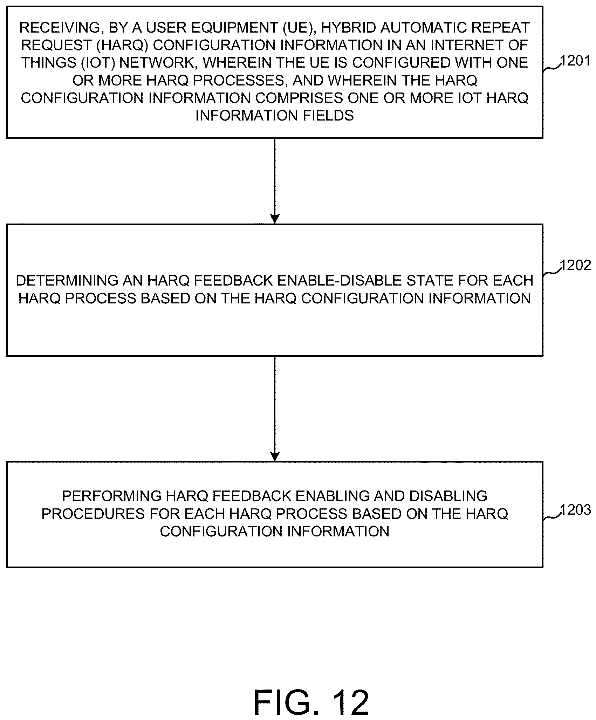

Figure 12 illustrates an exemplary flow chart for the UE in the IoT network to disable HARQ feedback process in accordance with embodiments of the current invention. At step 1201, the UE receives HARQ configuration information in an Internet of Things (IoT) network, wherein the UE is configured with one or more HARQ processes, and wherein the HARQ configuration information comprises one or more IoT HARQ information fields. At step 1202, the UE determines an HARQ feedback enable-disable state for each HARQ process based on the HARQ configuration information. At step 1203, the UE performing HARQ feedback enabling and disabling procedures for each HARQ process based on the HARQ configuration information..

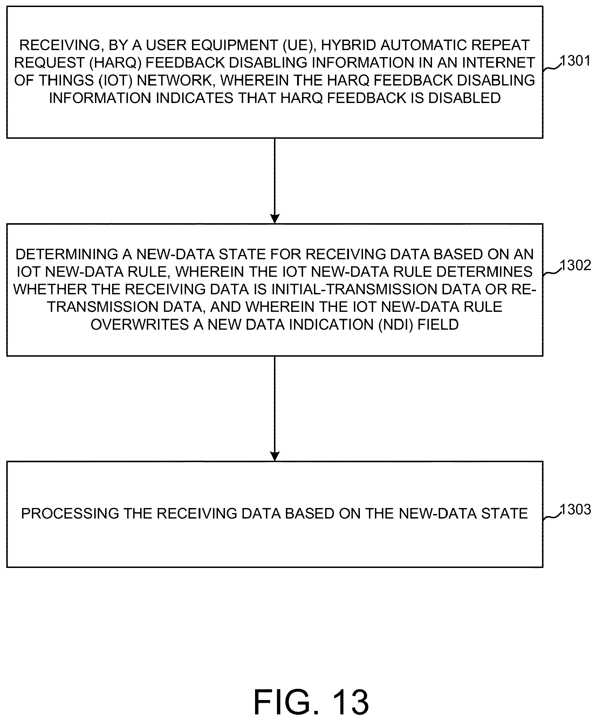

Figure 13 illustrates an exemplary flow chart of an IoT UE in the NTN applying IoT new-data rule in accordance with embodiments of the current invention. At step 1301, the UE receives HARQ feedback disabling information in an Internet of Things (IoT) network, wherein the HARQ feedback disabling information indicates that HARQ feedback is disabled. At step 1302, the UE determines a new-data state for receiving data based on an IoT new-data rule, wherein the IoT new-data rule determines whether the receiving data is initial-transmission data or re-transmission data, and wherein the IoT new-data rule overwrites a new data indication (NDI) field. At step 1303, the UE processes the receiving data based on the new-data state.

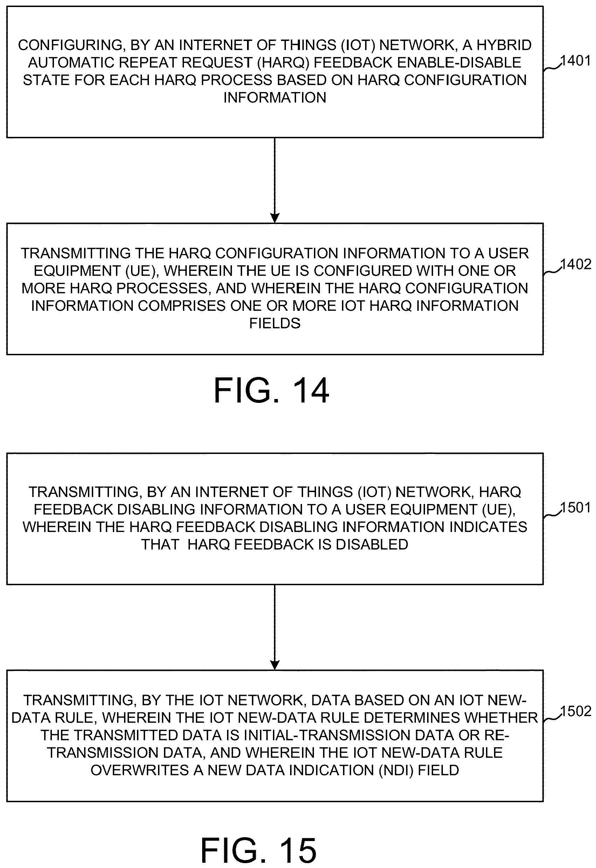

Figure 14 illustrates an exemplary flow chart for the network entity in the IoT network to disable HARQ feedback process in accordance with embodiments of the current invention. At step 1401, the IoT network entity configures an HARQ feedback enable-disable state for each HARQ process based on HARQ configuration information. At step 1402, the network entity transmits the HARQ configuration information to a user equipment (UE), wherein the UE is configured with one or more HARQ processes, and wherein the HARQ configuration information comprises one or more IoT HARQ information fields. Preferably, the one or more IoT HARQ information fields comprise an IoT per-HARQ-process-feedback enable-disable field that indicates an HARQ feedback enable-disable state per HARQ process, an explicit IoT HARQ feedback field, and an implicit IoT HARQ feedback field. Alternatively or additionally preferably, the IoT per-HARQ-process-feedback enable-disable field is configured through UE specific radio resource control (RRC) signaling or cell specific RRC signaling, and wherein IoT per-HARQ-process-feedback enable-disable field is updated periodically or aperiodically with dedicated RRC signaling or MAC CE. Alternatively or additionally preferably, the IoT HARQ information field includes the implicit IoT HARQ feedback field, which is a repetition number in corresponding DCI, and wherein the repetition number is compared to a predefined threshold value to configure the HARQ feedback enable-disable state for each HARQ process. Preferably, the predefined threshold value equals to an predefined maximum repetition number, or a first specific repetition number that is integer times of an predefined maximum repetition number for corresponding HARQ process, or a second specific repetition number that is smaller than an predefined maximum repetition number for corresponding HARQ process, and wherein the second specific repetition number is configured through UE specific radio resource control (RRC) signaling or cell specific RRC signaling. Alternatively or additionally preferably, the predefined threshold value is updated periodically or aperiodically with dedicated RRC signaling or MAC CE, and the IoT network updates a differential value or a full value of the predefined threshold value.

Figure 15 illustrates an exemplary flow chart of a network entity in the NTN applying IoT new-data rule in accordance with embodiments of the current invention. At step 1501, the IoT network entity transmits HARQ feedback disabling information to a user equipment (UE), wherein the HARQ feedback disabling information indicates that HARQ feedback is disabled. At step 1502, the IoT network entity transmits data based on an IoT new-data rule, wherein the IoT new-data rule determines whether the transmitted data is initial-transmission data or re-transmission data, and wherein the IoT new-data rule overwrites a new data indication (NDI) field.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
receiving, by a user equipment, in the following also referred to as UE, hybrid automatic repeat request, in the following also referred to as HARQ, configuration information in an Internet of Things, in the following also referred to as IoT, network, wherein the UE is configured with one or more HARQ processes, and wherein the HARQ configuration information comprises one or more IoT HARQ information fields (1201);
determining an HARQ feedback enable-disable state for each HARQ process based on the HARQ configuration information (1202); and
performing HARQ feedback enabling and disabling procedures for each HARQ process based on the HARQ configuration information (1203).

2. The method of claim 1, wherein the one or more IoT HARQ information fields comprise an IoT per-HARQ-process-feedback enable-disable field that indicates an HARQ feedback enable-disable state per HARQ process, an explicit IoT HARQ feedback field, and an implicit IoT HARQ feedback field.

3. The method of claim 2, wherein the IoT per-HARQ-process-feedback enable-disable field is received through UE specific radio resource control, in the following also referred to as RRC, signaling, and wherein the determining HARQ feedback enable-disable state of each HARQ process is based on the IoT per-HARQ-process-feedback enable-disable field.

4. The method of claim 2 or 3, wherein the IoT per-HARQ-process-feedback enable-disable field includes HARQ process number equals to zero, and wherein the HARQ feedback enabling and disabling procedures further includes: performing HARQ feedback enabling and disabling procedures for the HARQ process without HARQ process number.

5. The method of any one of claims 2 to 4, wherein the explicit IoT HARQ feedback field is received in a downlink control information, in the following also referred to as DCI.

6. The method of any one of claims 2 to 5, wherein the IoT per-HARQ-process-feedback enable-disable field is not present and the UE performing HARQ feedback enabling and disabling procedures based on the explicit IoT HARQ feedback field that explicitly indicates an enable-disable feedback state for one or more HARQ processes.

7. The method of any one of claims 2 to 6, wherein the UE is a narrow band, in the following also referred to as NB, IoT device, and wherein the enable-disable feedback state for each HARQ process is determined based on the IoT per-HARQ-process-feedback enable-disable field, and wherein the explicit IoT HARQ feedback field overwrites the IoT per-HARQ-process-feedback enable-disable field for one or more corresponding HARQ processes when presented based on an overwriting rule.

8. The method of any one of claims 2 to 7, wherein the HARQ feedback enable-disable state for each HARQ process is determined based on the implicit IoT HARQ feedback field.

9. The method of claim 8, wherein the implicit IoT HARQ feedback field is a repetition number in corresponding DCI, and wherein the repetition number is compared to a predefined threshold value to determine the HARQ feedback enable-disable state for each HARQ process.

10. The method of claim 8 or 9, wherein the UE is an NB IoT device, the implicit IoT HARQ feedback field are a Scheduling delay field and an HARQ-ACK resource field in corresponding DCI, and wherein the UE determines an HARQ feedback disable state for corresponding HARQ process when the Scheduling delay field is '000' and the HARQ-ACK resource field is `0000', otherwise, determines an HARQ feedback enable state for corresponding HARQ process.

11. The method of any one of claims 8 to 10, wherein the UE is an eMTC CE-Mode-A IoT device, the implicit IoT HARQ feedback field are a TPC command for PUCCH field and an HARQ-ACK resource offset field in corresponding DCI, and wherein the UE determines an HARQ feedback disable state for corresponding HARQ process when the TPC command for PUCCH field is '00' and the HARQ-ACK resource offset field is '00', otherwise, determines an HARQ feedback enable state for corresponding HARQ process.

12. The method of claim 8, wherein the UE is an eMTC CE-Mode-B IoT device, the implicit IoT HARQ feedback field are an Information for SC-MCCH change notification field and an HARQ-ACK resource offset field in corresponding DCI, and wherein the UE determines an HARQ feedback disable state for corresponding HARQ process when the Information for SC-MCCH change notification field is '00' and the HARQ-ACK resource offset field is '00', otherwise, determines an HARQ feedback enable state for corresponding HARQ process.

13. A method, comprising:
receiving, by a user equipment, in the following also referred to as UE, hybrid automatic repeat request, in the following also referred to as HARQ, feedback disabling information in an Internet of Things, in the following also referred to as IoT, network, wherein the HARQ feedback disabling information indicates that HARQ feedback is disabled (1301);
determining a new-data state for receiving data based on an IoT new-data rule, wherein the IoT new-data rule determines whether the receiving data is initial-transmission data or re-transmission data, and wherein the IoT new-data rule overwrites a new data indication, in the following also referred to as NDI, field (1302); and
processing the receiving data based on the new-data state (1303).

14. The method of claim 13, wherein the UE is an NB IoT device and the IoT new-data rule is based on the NDI field and a HARQ-ACK resource field in data control information, in the following also referred to as DCI.

15. The method of claim 13 or 14, wherein the UE is an enhanced machine type communication, in the following also referred to as eMTC, CE-Mode-A IoT device and the IoT new-data rule is based on the NDI field and a transmit power control, in the following also referred to as TPC, command for physical uplink control channel, in the following also referred to as PUCCH, field in DCI.
